**Europäisches Patentamt**

**European Patent Office**

**Office européen des brevets**

(19)

(11) Veröffentlichungsnummer: **0 026 504**
**B1**

(12)

# EUROPÄISCHE PATENTSCHRIFT

(45) Veröffentlichungstag der Patentschrift:
**01.12.82**

(21) Anmeldenummer: **80200776.5**

(22) Anmeldetag: **18.08.80**

(51) Int. Cl.³: **B 60 T 15/12,** B 60 T 15/14,
B 60 T 13/40

(54) **Absenkeinrichtung einer Führerbremsventilanlage für indirekt wirkende Druckluftbremsen von Schienenfahrzeugen.**

(30) Priorität: **28.09.79 CH 8774/79**

(43) Veröffentlichungstag der Anmeldung:
**08.04.81 Patentblatt 81/14**

(45) Bekanntmachung des Hinweises auf die Patenterteilung:
**01.12.82 Patentblatt 82/48**

(84) Benannte Vertragsstaaten:
**AT BE CH DE FR GB IT LI NL SE**

(56) Entgegenhaltungen:
**EP-A-0 001 136**
**DE-A-2 022 233**

(73) Patentinhaber: **Werkzeugmaschinenfabrik
Oerlikon-Bührle AG, Birchstrasse 155, CH-8050 Zürich
(CH)**

(72) Erfinder: **Thöny, Riet, Nürenbergstrasse 23,
CH-8037 Zürich (CH)**
Erfinder: **Troyan, Francesco, Saatlenstrasse 273,
CH-8050 Zürich (CH)**
Erfinder: **Oldani, Karl, Leimgrübelstrasse 18,
CH-8052 Zürich (CH)**
Erfinder: **Abele, Georg, Kreuzwiesenstrasse 6,
CH-8051 Zürich (CH)**
Erfinder: **Srbinovic, Slobodan, Kunklerstrasse 20,
CH-8600 Dübendorf (DE)**

ACTORUM AG

Absenkeinrichtung einer Führerbremsventilanlage für indirekt wirkende Druckluftbremsen von Schienenfahrzeugen

Die Erfindung betrifft eine Absenkeinrichtung einer Führerbremsventilanlage für indirekt wirkende Druckluftbremsen von Schienenfahrzeugen, wobei die Führerbremsventilanlage einen Druckregler und ein Hauptsteuerventil zum Steuern des Luftdruckes in einer Hauptleitung und die Absenkeinrichtung, die zum Erzeugen eines grösseren Brems- und eines kleineren Lösesprungs, d.h. einer Schalthysterese ausgebildet ist, ein in einer Verbindungsleitung zwischen Druckregler und einer Steuerkammer des Hauptsteuerventils angeordnetes Ventil aufweisen.

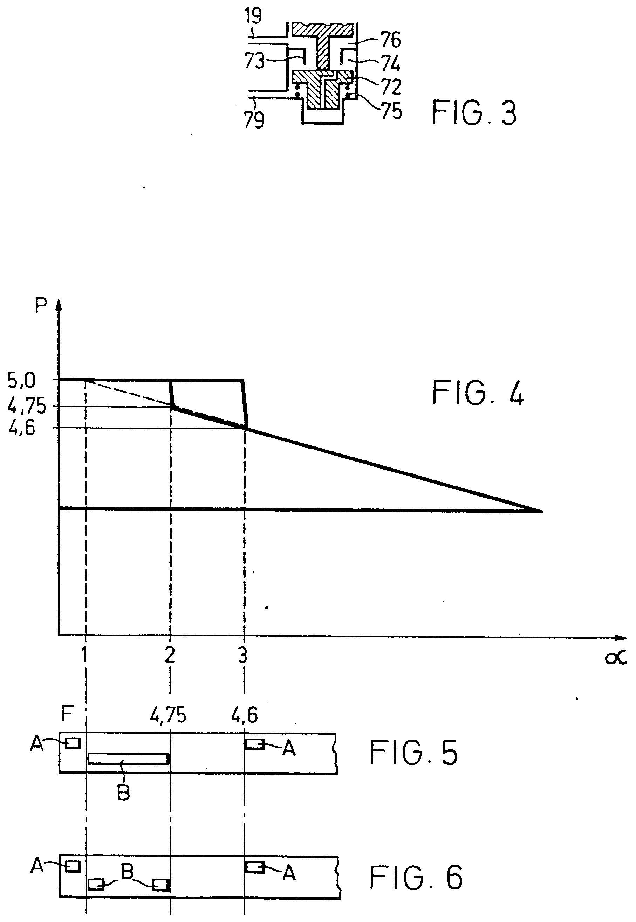

Solche Absenkeinrichtungen sind bekannt, beispielsweise aus der Europäischen Patentanmeldung Nr. 78 200 146.5 bzw. EP-A 1136. Nachteilig wirkt sich bei diesen Absenkeinrichtungen aus, dass beim Lösen der Bremse der Druck in der Steuerkammer des Hauptsteuerventils nicht den vollen Wert des Regeldruckes erreicht, bedingt durch die Schaltdifferenz des als Rückschlagventil ausgebildeten Ventils. Es ist zwar ein Ausführungsbeispiel beschrieben, gemäss Fig. 3, bei dem durch ein weiteres, nockenbetätigbaren Ventil der volle Regeldruck in der Steuerkammer des Hauptsteuerventils gewährleistet wird. Für die Betätigung dieses weiteren Ventils wird auch eine zusätzliche Nockenscheibe angeordnet auf einer Welle des Druckreglers bzw. des Führerbremshebels, benötigt. Auch muss dieses weitere Ventil am Druckregler direkt befestigt werden, also im Führerventilsteuerteil bzw. im Führerstand einer Lokomotive, währenddem das erste Ventil im Führerventilarbeitsteil bzw. an der Arbeitsteilschalttafel und damit räumlich getrennt angebracht ist.

Die Aufgabe der vorliegenden Erfindung, wie sie durch die Ansprüche gekennzeichnet ist, besteht darin, eine Absenkeinrichtung mit einem geringeren Aufwand an Bauteilen und pneumatischen Verbindungsleitungen zu schaffen unter Gewährleistung des Erreichens der vollen Regeldruckhöhe in der Steuerkammer des Hauptsteuerventils nach dem Lösen der Bremsen.

Der Vorteil der vorliegenden Erfindung ist hauptsächlich darin zu erblicken, dass die Absenkeinrichtung nur eine einzige pneumatische Ventileinheit aufweist, wie dies aus den jeweils unabhängigen Alternativlösungen gemäss den Ansprüchen 1 und 2 hervorgeht.

Zwei Ausführungsbeispiele der erfindungsgemässen Absenkeinrichtung sind anhand der beigefügten Zeichnungen dargestellt und im folgenden ausführlich beschrieben. Es zeigen:

Fig. 1 eine schematische Darstellung der Absenkeinrichtung gemäss einem ersten Ausführungsbeispiel;

Fig. 2 eine schematische Darstellung der Absenkeinrichtung gemäss einem zweiten Ausführungsbeispiel;

Fig. 3 eine schematische Darstellung eines Druckausgleichsventils;

Fig. 4 ein Diagramm des Druckverlaufs in der Hauptleitung und im Druckregler in Abhängigkeit der Stellung des Führerbremshebels;

Fig. 5 einen Teil einer abgerollten Nockenscheibe in Abhängigkeit der Stellung des Führerbremshebels, gemäss einer ersten Variante;

Fig. 6 einen Teil einer abgerollten Nockenscheibe in Abhängigkeit der Stellung des Führerbremshebels, gemäss einer zweiten Variante.

Die Zeichnungen zeigen schematische Darstellungen von Führerbremsventilanlagen mit erfindungsgemässen Absenkeinrichtungen. Der besseren Übersicht halber sind bekannte Einrichtungen und Verbindungsleitungen der Führerbremsventilanlage, die zum Verständnis der Erfindung nicht notwendig sind, weggelassen worden.

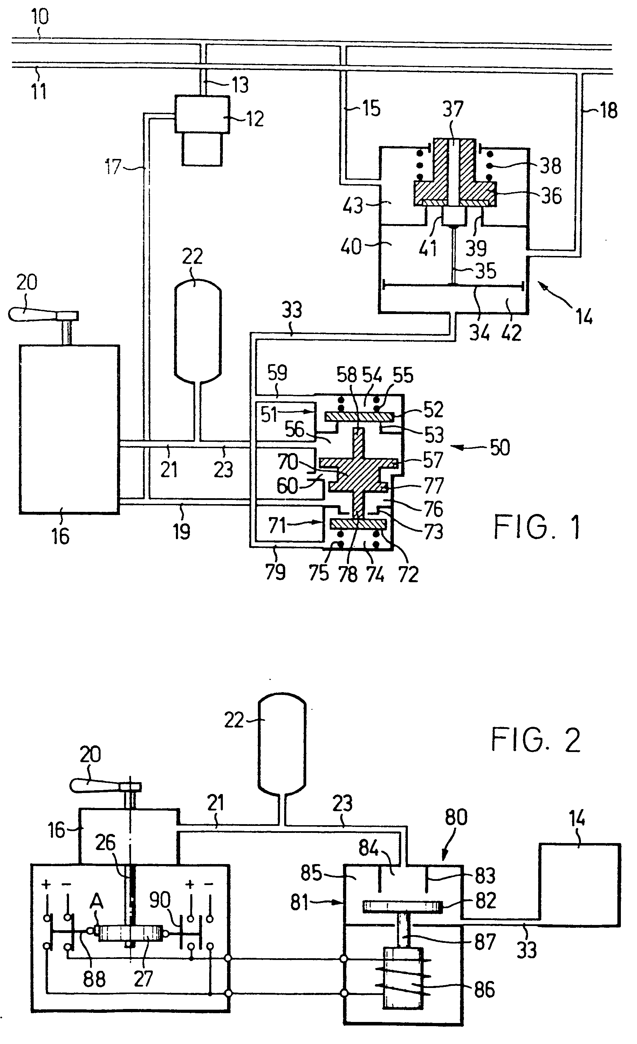

Gemäss Fig. 1 weist eine Führerbremsventilanlage eine Speiseleitung 10 und eine Hauptleitung 11 auf. An die Speiseleitung 10 ist einerseits ein Druckbegrenzer 12 über eine Zweigleitung 13 und anderseits ein Hauptsteuerventil 14 über eine Zweigleitung 15 angeschlossen. An den Druckbegrenzer 12 ist ein Druckregler 16 über eine Leitung 17 angeschlossen. Der Druckbegrenzer 12 sorgt dafür, dass die dem Druckregler 16 zugeführte Druckluft ständig konstanten Druck aufweist. Der Druckregler 16, mit einem daran angeordneten Führerbremshebel 20, ist von an sich bekannter Bauart und deshalb hier nicht mehr im Detail dargestellt und beschrieben.

Das bekannte Hauptsteuerventil 14 wird zum besseren Verständnis der vorliegenden Erfindung anschliessend näher erläutert. An einem Kolben 34, angeordnet zwischen einer Steuerkammer 42 und einer Druckkammer 40, ist ein Stössel 35 mit einem ersten Ventilsitz 41 befestigt zur Betätigung eines Ventiltellers 36, der seinerseits eine Entlüftungsbohrung 37 aufweist. Eine Feder 38 hat das Bestreben, den Ventilteller 36 gegen einen zweiten Ventilsitz 39 zu drücken. Die Druckkammer 40 ist über eine Leitung 18 mit der Hauptleitung 11 verbunden. Über dem Ventilteller 36 ist eine dritte Kammer 43 vorhanden, die mit der Speiseleitung 10 verbunden ist. Das Hauptsteuerventil 14 besitzt drei Stellungen. In einer ersten Stellung, wenn der Druck in der Steuerkammer 42 grösser ist als der Druck in der Druckkammer 40, ist der Ventilteller 36 von seinem Ventilsitz 39 abgehoben. Druckluft aus der Speiseleitung 10 fliesst nun über die Zweigleitung 15 und Kammer 43 in die Druckkammer 40 und von dort über die Leitung 18 in die Hauptleitung 11. In einer zweiten Stellung, wenn der Druck in den beiden Kammern 40 und 42 gleich gross ist, liegt aufgrund der Stellung des Kolbens 34 der Ventilteller 36 auf seinem Ventilsitz 39 auf und der Ventilstössel 35 am Ventilteller 36 an. Somit ist das Doppelsitzventil geschlossen. In einer dritten Stellung, wenn der Druck in der Steuerkammer 42 absinkt, hebt sich der Ventilstössel 35 vom Ventilteller 36 ab, und Druckluft strömt aus der Hauptleitung 11 über die Leitung 18 und Druckkammer 40 durch die Entlüftungsbohrung 37 in die Atmosphäre ab.

Die erfindungsgemässe Absenkeinrichtung besteht in diesem Beispiel aus dem Absenkventil 50. Dieses ist als pneumatische Ventileinheit mit zwei zusammenwirkenden Ventilen 51 und 71 ausgebildet. Das erste als Rückschlagventil ausgebildete Ventil 51 weist eine Schliessfeder 55, die einen Ventilteller 52 auf einen Ventilsitz 53 drückt, auf. Ein Druckraum 56, der einerseits vom Ventilteller 52 und andererseits von einem grösseren Kolben 57 eines Differentialkolbens 70 begrenzt wird, ist über eine Verbindungsleitung 23 mit einem Steuerbehälter 22 und über eine Verbindungsleitung 21 mit dem Druckregler 16 verbunden. Mit einem am Differentialkolben 70 befestigten Ventilstössel 58 sowie durch den Druck der Druckkammer 56 kann der Ventilteller 52 in Öffnungsrichtung von seinem Sitz 53 abgehoben werden. Eine in offener Stellung mit der Druckkammer 56 verbundene weitere Kammer 54 ist über Verbindungsleitungen 59 und 33 mit der Steuerkammer 42 des Hauptsteuerventils 14 verbunden. Das zweite Ventil 71 weist einen Ventilteller 72, einen ringförmigen Ventilsitz 73, eine Schliessfeder 75, einen von einem kleineren Kolben 77 des Differentialkolbens 70 einseitig begrenzten Druckraum 76 und ein am Differentialkolben 70 befestigten Stössel 78 auf. Der Druckraum 76 ist über Verbindungsleitungen 19 und 17 mit dem Druckbegrenzer 12 verbunden. Ein beim offenen Ventil 71 in Verbindung mit dem Druckraum 76 stehender weiterer Druckraum 74 ist über eine Verbindungsleitung 79 ebenfalls mit der Steuerkammer 42 des Hauptsteuerventils 14 verbunden.

Die Wirkungsweise des beschriebenen Auführungsbeispieles ist wie folgt. In der Speiseleitung 10 herrscht ein Druck von 5 bis 8 bar. Der Druckbegrenzer 12 sorgt dafür, dass in der Leitung 17 ein möglichst konstanter Druck von 5 bar herrscht. Mit Hilfe des Führerbremshebels 20 und einer nicht dargestellten Kurvenscheibe kann der Druckregler 16 betätigt werden, um den Druck in den Leitungen 21 und 23 sowie im Steuerbehälter 22 zwischen den Werten 3,5 und 5 bar zu verändern. Die Form der Kurvenscheibe ist aus Fig. 4 erkennbar und wird später näher erläutert. Die Ventilstellungen gemäss Fig. 1 entsprechen der Fahrtstellung. Der Führerbremshebel 20 ist so gestellt, dass der Druckregler 16 den maximalen Druck von 5 bar in den Leitungen 21 und 23 erzeugt. Auch der Druckbegrenzer 12 liefert einen Druck von 5 bar über die Leitungen 17 und 19 in die Kammer 76 und durch das offene Ventil 71 in die Kammer 74 und die Leitungen 79, 33, 59 und somit in die Kammern 54 und 42. Beide Sitze im Hauptsteuerventil 14 sind geschlossen, da die Hauptleitung 11 aufgefüllt ist.

Zum Bremsen muss der Führerbremshebel 20 derart geschwenkt werden, dass der Druck in der Leitung 21 absinkt. Damit sinkt auch der Druck in der Kammer 56 des Ventils 51 ab, gemäss der gestrichelt dargestellten Linie in Fig. 4. Das als Rückschlagventil ausgebildete Ventil 51 verhindert jedoch vorerst, dass der Druck in den Kammern 54 und 42 absinkt, wodurch auch der Druck in der Hauptleitung 11 unverändert erhalten bleibt. Bei einem Druck von z.B. 4,75 bar in der Kammer 56 vermag der Druck von 5 bar in der Kammer 76 den Differentialkolben 70 aus der bisherigen Stellung soweit zu verschieben, dass der Ventilstössel 58 am Ventilteller 52 ansteht. Die Schliessfeder 54 und der höhere Druck in der Kammer 54 verhindert vorerst ein Öffnen des Ventils 51. Das Ventil 71 jedoch ist nun durch die Kraft der Feder 75 geschlossen worden. Der Druck in der Steuerkammer 42 bleibt jedoch auf seiner bisherigen Höhe erhalten. Sinkt der Druck in der Kammer 56 weiter ab, z.B. auf 4,6 bar, so vermag der Differentialkolben 70 den Ventilteller 52 vom Sitz 53 abzuheben, wodurch der Druck in der Steuerkammer 42 sprunghaft auf den vom Druckregler 16 vorgegebenen Steuerdruck der Kammer 56 abfällt. Dadurch wird ebenfalls die Hauptleitung 11 auf einen Druck von 4,6 bar entlüftet. Anschliessend kann der Druck in der Hauptleitung 11 über die Steuerkammer 42 und das Ventil 51 vom Druckregler 16 entsprechend dessen Kurvenscheibe bis auf beispielsweise 3,5 bar abgesenkt werden. Dieser Vorgang ist aus Fig. 4 ersichtlich, wobei der sprunghafte Druckabfall, Bremssprung genannt, in der Hauptleitung 11 an der Stelle 3 erwirkt wird.

Beim Bremslösen muss der Führerbremshebel 20 derart geschwenkt werden, dass der Druck in der Leitung 21 ansteigt. Da das Ventil 51 vom Differentialkolben 70 offengehalten wird, gelangt Druckluft aus der Kammer 56 ungehindert in die Steuerkammer 42 des Hauptsteuerventils 14, wodurch der Druck in der Hauptleitung 11 entsprechend ansteigt. Erreicht der Druck in der Kammer 56 einen Wert von ca. 4,65 bar, so verschiebt sich der Differentialkolben 70 in Richtung des Ventils 71 ohne dieses vorerst zu öffnen. Da die Feder 55 sehr schwach ausgebildet ist, kann weiterhin Druckluft aus der Kammer 56 in die Kammer 54 und von dort über die Leitungen 59 und 33 in die Steuerkammer 42 fliessen, d.h. der Druck in der Steuerkammer 42 steigt weiterhin mit dem vorgegebenen Druck des Druckreglers an. Erreicht nun der Steuerdruck in der Kammer 56 einen Wert von ca. 4,75 bar, vermag der Differentialkolben 70 das Ventil 71 zu öffnen, wodurch der Druck in den Kammern 74, 54 und 42 sprunghaft auf den entsprechenden Druck des Druckbegrenzers 12 bzw. der Kammer 76, also auf 5 bar, ansteigt. Gemäss Fig. 4 erfolgt dieser als Lösesprung bezeichnete Anstieg an der Stelle 2. Das Ventil 51 ist nun auch aufgrund des in der Kammer 54 gegenüber der Kammer 56 herrschenden höheren Druckes geschlossen.

Um zu verhindern, dass beim Bremsen der höhere Druck in der Kammer 76 den Ventilteller 72 nicht ungewollt zu öffnen vermag, ist eine kleine kreisförmige Ventildurchlassöffnung und ein ringförmiger Ventilsitz mit entsprechend breiter Schulter vorgesehen. In dieser Anordnung kann die Schliessfeder 75 relativ schwach dimensioniert werden. Diese vorteilhafte Ausführung ermöglicht mindestens teilweise die Verwendung von gleichen Komponenten für die Ventile 51 und 71 und führt daher zur Verbilligung in der Herstellung des Absenkventils 50. Die gleiche Funktion kann aber auch mit Hilfe einer stärker vorgespannten Schliessfeder 75 oder eine entsprechende Kombination von Druckkraft der Schliessfeder 75 und Schulterbreite des ringförmigen Ventilsitzes 73 erzielt werden. Eine weitere vorteilhafte Möglichkeit ist in Fig. 3 in Form eines an sich bekannten Druckausgleichsventils dargestellt.

Im weiteren weist das erfindungsgemässe Absenkventil 50 zwischen dem grossen Kolben 57 und dem kleinen Kolben 77 eine Entlüftungskammer 60 mit entsprechender Verbindungsöffnung zur Atmosphäre auf.

Diese erfindungsgemässe Absenkeinrichtung mit einer einzigen pneumatischen Ventileinheit, das Absenkventil 50, ermöglicht eine wesentliche Reduktion an Materialaufwand gegenüber der eingangs erwähnten, den Stand der Technik bildenden Absenkeinrichtung mit zwei getrennten pneumatischen Ventileinheiten und zwei Nockenscheiben an der Führerbremshebelwelle.

Ein zweites Ausführungsbeispiel, gemäss Fig. 2, zeigt den Druckregler 16 mit dem Führerbremshebel 20, die Steuerdruckleitung 21, die Steuerkammer 22, die Verbindungsleitungen 23 und 33 sowie als Block das Hauptsteuerventil 14. Zwischen den Verbindungsleitungen 23 und 33 ist eine pneumatische Ventileinheit, nämlich ein bistabilisches Elektromagnetventil 80 angeordnet. Dieses bistabile Elektromagnetventil 80 enthält ein pneumatisches Ventil 81 und einen bistabilen Elektromagneten 86. Das Ventil 81 weist einen Ventilteller 82, einen Ventilsitz 83, eine mit der Steuerleitung 23 verbundene Kammer 84 und eine mit der Steuerleitung 33 verbundene Kammer 85 auf. Der Ventilteller 82 ist mit dem Elektromagnet 86 über einen Stössel 87 fest verbunden. Am Druckregler 16 sind zwei elektrische Schalter 88 und 90 angeordnet. Auf einer Welle 26 des Führerbremshebels 20 im Druckregler 16 ist eine Nockenscheibe 27 befestigt, mit deren Hilfe die beiden Schalter 88 und 90 betätigt werden. Die Spule des Elektromagneten 86 kann jeweils über nur je einen der beiden Schalter 88 oder 90 und je nach Schalter in umgepolter Stromrichtung an eine Spannungsquelle angeschlossen werden.

In Fig. 5 und 6 zeigen zwei Ausführungsbeispiele Anordnungen von Nocken auf der Nockenscheibe 27. Die Nocken A wirken auf den Schalter 88 und die Nocken B auf den Schalter 90. Auf der Oberseite der Nockenscheibe ist die entsprechende Druckstellung des Führerbremshebels 20 angebracht.

Die Wirkungsweise des zweiten Ausführungsbeispieles ist folgende. Befindet sich der Führerbremshebel 20 bzw. der Druckregler 16 in Fahrtstellung, gemäss Fig. 5 und 6 in Stellung F, so ist über den Nocken A nur der Schalter 88 eingeschaltet. Das Elektromagnetventil befindet sich in der Stellung «Offen». Der Druckregler 16 ist über die Verbindungsleitungen 21, 23 und 33 mit dem Hauptsteuerventil 14 direkt verbunden. Beim Bremsen wird sofort nach Verlassen der Fahrtstellung des Führerbremshebels 20, bei der Stellung 1 gemäss Fig. 4, der Schalter 90 durch den Nocken B gemäss Fig. 5 oder Fig. 6 eingeschaltet und dadurch das bistabile Elektromagnetventil 80 in seine Schliessstellung gebracht. Die Verbindung vom Druckregler 16 zum Hauptsteuerventil 14 ist damit unterbrochen. Obwohl nun der Druck des Druckreglers 16 in den Leitungen 21 und 23, gemäss der gestrichelten Kurve von Fig. 4, abgesenkt wird, bleibt der Druck in der Leitung 33 und im Hauptsteuerventil 14 auf dem vorherigen Wert erhalten. Wird der Druckregler 16 weiter abgesenkt und erreicht er die Stellung 4,6 bar, so schliesst der Nocken A den Schalter 88 und das bistabile Elektromagnetventil stellt die Verbindung zwischen dem Druckregler 16 und dem Hauptsteuerventil 14 wieder her. Die hier nicht dargestellte Hauptleitung wird abgesenkt.

Beim Lösen wird die Verbindung von Druckregler 16 und Hauptsteuerventil 14 beim Druck von ca. 4,75 bar unterbrochen, indem der Nocken B den Schalter 90 schliesst. Im Bereich zwischen 5,0 und 4,75 bar sind daher keine kleine Lösestufen beim Hauptsteuerventil möglich. Sobald die Fahrtstellung erreicht wird, öffnet das Elektromagnetventil 80 infolge Auslösung des Schalters 88 durch den Nocken A.

**Patentansprüche**

1. Absenkeinrichtung einer Führerbremsventilanlage für indirekt wirkende Druckluftbremsen von Schienenfahrzeugen, wobei die Führerbremsventilanlage einen Druckregler (16) und ein Hauptsteuerventil (14) zum Steuern des Luftdruckes in einer Hauptleitung (11) und die Absenkeinrichtung (50), die zum Erzeugen eines grösseren Brems- und eines kleineren Lösesprunges, d.h. einer Schalthysterese ausgebildet ist, ein in einer Verbindungsleitung (23, 33) zwischen Druckregler (16) und einer Steuerkammer (42) des Hauptsteuerventils (14) angeordnetes Ventil (51) aufweisen, dadurch gekennzeichnet, dass die Absenkeinrichtung eine einzige pneumatische Ventileinheit (50) aufweist, die als Absenkventil (50) ausgebildet ist, das zusätzlich zu dem ersten Ventil (51) ein zweites Ventil (71), angeordnet in einer Verbindungsleitung (19, 79) zwischen einem Druckbegrenzer (12) und der Steuerkammer (42) des Hauptsteuerventils (14), zwei Druckkammern (56, 76) und einen mit den Druckkammern zusammenwirkenden Differentialkolben (70) aufweist, dass der Druckraum (56) mit dem grösseren Kolben (57) das erste Ventil (51) mit dem Druckregler (16) und der Druckraum (76) mit dem kleineren Kolben (77) das zweite Ventil (71) mit dem Druckbegrenzer (12) verbindet.

2. Absenkeinrichtung einer Führerbremsventilanlage für indirekt wirkende Druckluftbremsen von Schienenfahrzeugen, wobei die Führerbremsventilanlage einen Druckregler (16) und ein Hauptsteuerventil (14) zum Steuern des Luftdruckes in einer Hauptleitung (11) und die Absenkeinrichtung (81), die zum Erzeugen eines grösseren Brems- und eines kleineren Lösesprunges, d.h. einer Schalthysterese ausgebildet ist, ein in einer Verbindungsleitung (23, 33) zwischen Druckregler (16) und einer Steuerkammer (42) des Hauptsteuerventils (14) angeordnetes Ventil (82) aufweisen, dadurch gekennzeichnet, dass die Absenkeinrichtung eine einzige pneumatische Ventileinheit (681) aufweist, in der das Ventil (82) ein vom Druckregler (16) gesteuertes, bistabiles Elektromagnetventil (80) darstellt.

3. Absenkeinrichtung gemäss Anspruch 1, dadurch gekennzeichnet, dass das Absenkventil (50) zwischen dem grossen (57) und dem kleinen Kolben (77) eine Entlüftungskammer (60) aufweist.

4. Absenkeinrichtung gemäss Anspruch 1 oder 3, dadurch gekennzeichnet, dass das erste Ventil (51) als Rückschlagventil ausgebildet ist.

5. Absenkeinrichtung gemäss Anspruch 1 oder 3, dadurch gekennzeichnet, dass ein Ventilsitz (73) des zweiten Ventils (71) ringförmig mit breiter Schulter ausgebildet ist.

6. Absenkeinrichtung gemäss Anspruch 1 oder 3, dadurch gekennzeichnet, dass das zweite Ventil (71) eine vorgespannnte Schliessfeder (75) aufweist.

7. Absenkeinrichtung gemäss Anspruch 1 oder 3, dadurch gekennzeichnet, dass das zweite Ventil (71) als Druckausgleichsventil ausgebildet ist.

8. Absenkeinrichtung gemäss Anspruch 2, dadurch gekennzeichnet, dass eine Nockenscheibe (27) des Druckreglers (16) Schaltorgane (A, B) aufweist zum Betätigen je eines elektrischen Schalters (88, 90) in einem Öffnungs- und einem Schliessstromkreis des bistabilen Elektromagnetventils (80).

**Claims**

1. Modulator means in a driver's brake valve equipment for indirectly acting compressed-air brakes of rail-vehicles, the driver's brake valve equipment comprising a pressure controller (16) and a main control valve (14) for controlling the pressure in a main air line (11), the modulator means (50), which exhibits a hysteresis for producing a larger brake-jump and a smaller release-jump, having a valve (51) arranged in a connecting pipe (23, 33) between the pressure controller (16) and a control chamber (42) of the control valve (14) characterised in that the modulator means is a single pneumatic valve unit (50), a modulator valve (50), having in addition to the first valve (51) a second valve (71), arranged in a connecting pipe (19, 79) between a pressure limiting valve (12) and the control chamber (42) of the control valve (14), two pressure chamber (56, 76) and there between a differential piston (70), and in that the pressure chamber (56) with the large piston (57) in it connects the first valve (51) to the pressure controller (16) and the pressure chamber (76) with the small piston (77) in it connects the second valve (71) with the pressure limiting valve (12).

2. Modulator means in a driver's brake valve equipment for indirectly acting compressed-air brakes of rail-vehicles, the driver's brake valve equipment comprising a pressure controller (16) and a main control valve (14) for controlling the pressure in a main air line (11), the modulator means (81), which exhibits a hysteresis for producing a larger brake-jump and a smaller release-jump, having a valve (82) arranged in a connecting pipe (23, 33) between the pressure controller (16) and a control chamber (42) of the control valve (14) characterised in that the modulator means is a single pneumatic valve unit (81), in which the valve (82) is actuated by a bistable electromagnetic valve (80) which is controlled by the pressure controller (16).

3. Modulator means according to claim 1, wherein the modulator valve (50) exhibits a chamber (60) open to atmosphere and arranged between the large (57) and the small pistons (77).

4. Modulator means according to claim 1 or 3, wherein the first valve (51) is a non-return valve.

5. Modulator means according to claim 1 or 3, wherein the second valve (71) exhibits an annular broad-shouldered valve seat (73).

6. Modulator means according to claim 1 or 3, wherein a pretensioned spring (75) is arranged to the second valve (71).

7. Modulator means according to claim 1 or 3, wherein the second valve (71) is a pressure equalization valve.

8. Modulator means according to claim 2, wherein switching members (A, B) are arranged to a cam wheel (27) at the pressure controller (16) for actuating electric switches (88, 90) in an opening and a closing circuit of the electromagnetic valve (80).

**Revendications**

1. Dispositif modulateur dans un·équipement de robinet de frein de mécanicien pour freins à air comprimé à action indirecte de véhicules ferroviaires, l'équipement de robinet de frein de mécanicien comportant un régulateur de pression (16) et une soupape de commande principale (14) pour commander la pression de l'air dans une conduite principale (11) et le dispositif modulateur (50), qui est agencé pour produire une variation brusque plus importante de freinage et une variation brusque plus faible de desserrage du frein, c'est-à-dire une hystérésis de commutation, comportant une soupape (51) disposée dans · une conduite de liaison (23, 33) entre le régulateur de pression (16) et une chambre de commande (42) de la soupape de commande principale (14), caractérisé en ce que le dispositif modulateur comporte une seule unité de soupape pneumatique (50), qui se présente sous la forme d'un robinet modulateur (50), qu'en plus de la première soupape (51), une seconde soupape (71), disposée dans une conduite de liaison (19, 79) entre un limiteur de pression (12) et la chambre de commande (42) de la soupape de commande principale (14), comporte deux chambres de pression (56, 76) et un piston différentiel (70) coopérant avec les chambres de pression, que la chambre de pression (56) avec le piston plus gros (57) relie la première soupape (51) au régulateur de pression (16), et la chambre de pression (76) avec le piston plus petit (77) relie la seconde soupape (71) au limiteur de pression (12).

2. Dispositif modulateur dans un équipement de robinet de frein de mécanicien pour freins à air comprimé à action indirecte de véhicules ferroviaires, l'équipement de robinet de frein de mécanicien comportant un régulateur de pression (16) et une soupape de commande principale (14) pour commander la pression de l'air dans une conduite principale (11) et le dispositif modulateur (81), qui est agencé pour produire une variation brusque plus importante de freinage et une variation brusque plus faible de desserrage du frein, c'est-à-dire une hystérésis de commutation, comportant une soupape (82) disposée dans une conduite de liaison (23, 33) entre le régulateur de pression (16) et une chambre de commande (42) de la soupape de commande principale (14), caractérisé en ce que le dispositif modulateur comporte une seule unité de soupape pneumatique (81) dans laquelle la soupape (82) est une soupape électromagnétique bistable (80) commandée par le régulateur de pression (16).

3. Dispositif modulateur suivant la revendication 1, caractérisé en ce que le robinet modulateur (50) comporte une chambre de mise à l'atmosphère (60) entre le gros (57) et le petit piston (77).

4. Dispositif modulateur suivant la revendication 1 ou 3, caractérisé en ce que la première soupape (51) se présente sous la forme d'une soupape de retenue.

5. Dispositif modulateur suivant la revendication 1 ou 3, caractérisé en ce qu'un siège de soupape (73) de la seconde soupape (71) possède une forme annulaire avec un large épaulement.

6. Dispositif modulateur suivant la revendication 1 ou 3, caractérisé en ce que la seconde soupape (71) comporte un ressort de fermeture (75) pré-tendu.

7. Dispositif modulateur suivant la revendication 1 ou 3, caractérisé en ce que la seconde soupape (71) se présente sous la forme d'une soupape d'équilibrage de pression.

8. Dispositif modulateur suivant la revendication 2, caractérisé en ce qu'un disque à cames (27) du régulateur de pression (16) comporte des organes de commutation (A, B) pour actionner respectivement un commutateur électrique (88, 90) dans un circuit de courant d'ouverture et de fermeture de la soupape électromagnétique (80).

0 026 504

FIG. 1

FIG. 2

7

0 026 504

FIG. 3

FIG. 4

FIG. 5

FIG. 6

9